# EUROPEAN PATENT APPLICATION

(11) **EP 3 203 090 A1**
(43) Date of publication of application: **09.08.2017**
(21) Application number: 16154188.3
(22) Date of filing: 04.02.2016
(51) Int. Cl.: F16B 7/02

(54) **LOCKING UNIT**

(71) Applicant: Tetra Laval Holdings & Finance S.A., 1009 Pully (CH)
(72) Inventor: CANALINI, Pierluigi, IT-41126 Modena (IT); CORAZZA, Federico, IT-40135 Bologna (IT)
(74) Representative: Tetra Pak - Patent Attorneys SE

(57) **Abstract**

A locking unit for locking a movable supporting element (2) on a guide element (3) comprises a body (4) surrounding said guide element (3) and provided with a seat (6) arranged for receiving a locking element (7), a moving unit (8) arranged for moving said locking element (7) with respect to said seat (6), said seat (6) having a conical surface (9), said locking element (7) having a further conical surface (10) arranged for interacting with said conical surface (9) and a locking surface (11), opposite to said further conical surface (10), arranged for interacting with said guide element (3).

## Description

The present invention relates to a locking unit for locking a movable supporting element on a guide element.

In many technical fields it is known to have a device, or a tool, supported by a supporting element that is movable, in particular slidable, on a guide element.

A locking unit may be associated to the supporting element to lock the supporting element in a desired position along the guide element.

In particular, the locking unit may be placed in an unlocked configuration, in which the support element is movable along the guide element until the support element reaches the desired position, and a locked configuration, in which the supporting element is kept in the desired position.

The known locking units, however, have been found to be unsatisfactory for various reasons.

In one case, the locking units are quite complicated and so it is difficult to move the locking units from the locking configuration to the unlocking configuration, and vice versa.

In another case, the locking units are not very reliable and not able to bear quite heavy loads.

An object of the invention is to improve the locking units for locking a movable supporting element on a guide element.

Another object of the invention is to provide a locking unit for locking a movable supporting element on a guide element that has a simple structure and can be easily moved from a locked configuration to an unlocked configuration, and vice versa.

Another object of the invention is to provide a locking unit for locking a movable supporting element on a guide element that can bear heavy loads.

Another object of the invention is to provide a locking unit for locking a movable supporting element on a guide element that is highly reliable.

According to the present invention, there is provided a locking unit for locking a movable supporting element on a guide element as claimed in claim 1.

Some preferred, non-limiting embodiments of the invention will be described by way of example with reference to the accompanying drawings, in which:
Figure 1 is a perspective view of a first embodiment of a locking unit according to the invention;
Figure 2 is perspective view, partly sectioned, of the locking unit of Figure 1;
Figure 3 is a perspective view, partly sectioned and with some parts removed, of the locking unit of Figure 1;
Figure 4 is a perspective view of a second embodiment of a locking unit according to the invention.

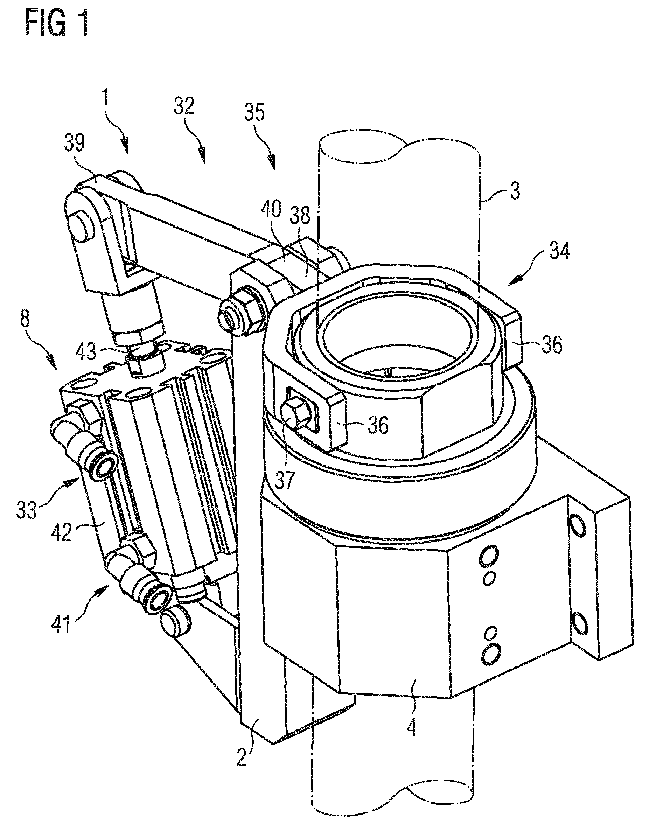

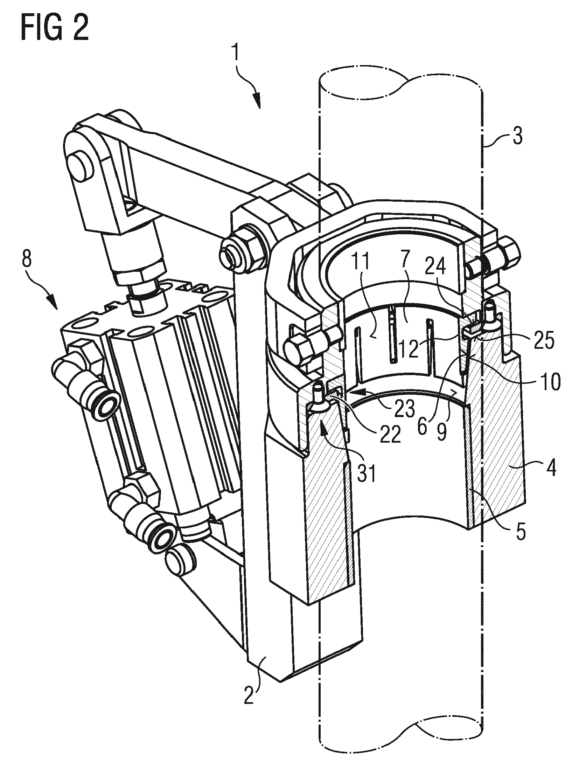

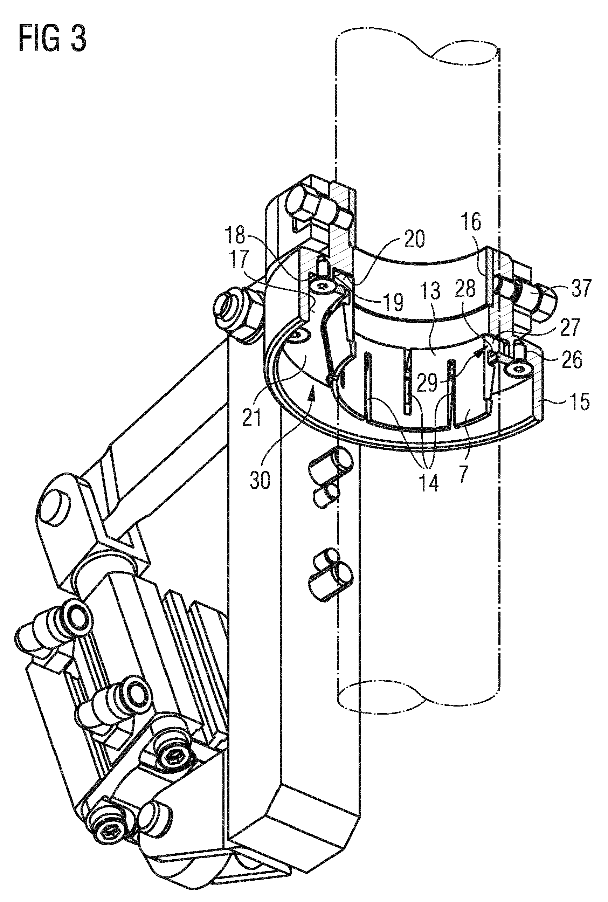

With reference to Figure 1 to 3 there is shown a locking unit 1 for locking a movable supporting element 2 on a guide element 3.

The supporting unit 2 is arranged for supporting a device (not shown), or a tool (not shown), which has to be positioned along, and locked on, the guide element 3.

In the example shown, the guide element 3 comprises a bar having a circular cross section.

The locking unit 1 comprises a body 4 fixed to the supporting element 2 and surrounding the guide element 3.

The body 4 comprises a bore 5 through which the guide element 3 passes in use, i.e. when the body 4 is coupled to the guide element 3.

The body 4 further comprises a seat 6 arranged for receiving a locking element 7 of the locking unit 1.

The locking element 7 comprises a further bore 12 through which the guide element 3 passes in use, i.e. when the locking element 7 is coupled to the guide element 3.

The seat 6 has a conical surface 9. The conical surface 9 is an inner surface of the seat 6.

The locking element 7 has a further conical surface 10 and a locking surface 11, opposite to the further conical surface 10.

The further conical surface 10 is an outer surface of the locking element 7. The locking surface 11 is an inner surface of the locking element 7.

The further conical surface 10 is arranged for interacting with the conical surface 9.

The locking surface 11 is arranged for interacting with the guide element 3.

The locking unit 1 comprises a moving unit 8 for moving the locking element 7 with respect to the seat 6.

The moving unit 8 moves the locking element 7 between an unlocked configuration, in which the supporting element 2 can slide with respect to the guide element 3, and a locked configuration, in which the supporting element 2 is clamped on the guide element 3.

In the unlocked configuration, the further conical surface 10 does not interact with the conical surface 9 and therefore the locking surface 11 does not contact the guide element 3: in this way, the locking surface 11 does not prevent the supporting element 2 from sliding on the guide element 3.

In the locked configuration, the further conical surface 10 interacts with the conical surface 9 and therefore the locking surface 11 contacts the guide element 3: in this way, the locking surface 11 prevents the supporting element 2 from sliding on the guide element 3.

The locking element 7 has the shape of a ring 13 provided with a plurality of cuts 14, particularly longitudinal cuts, which increase the deformability of the locking element 7, when the further conical surface 10 interacts with the conical surface 9.

The moving unit 8 comprises a carrying element 15 arranged for carrying the locking element 7.

The carrying element 15 comprises a still further bore 16 through which the guide element 3 passes in use, i.e. when the carrying element 15 is coupled to the guide element 3.

The still further bore 16 is coaxial with the further bore 12.

The carrying element 15 defines an inner cavity 21 that is delimited by a first longitudinal surface 17, i.e. parallel to the lateral surface of the guide element 3, a first radial surface 18, i.e. transversal, perpendicular in the embodiment shown, to the lateral surface of the guide element 3, a second longitudinal surface 19, i.e. parallel to the lateral surface of the guide element 3 and a second radial surface 20, i.e. transversal, perpendicular in the embodiment shown, to the lateral surface of the guide element 3.

The first radial surface 18 is interposed between the first longitudinal surface 17 and the second longitudinal surface 19.

The second longitudinal surface 19 is interposed between the first radial surface 18 and the second radial surface 20.

The first longitudinal surface 17 is a cylindrical surface having a first diameter.

The second longitudinal surface 19 is a cylindrical surface having a second diameter.

The first longitudinal surface 17 is coaxial with the second longitudinal surface 19 and the first diameter is greater than the second diameter.

The moving unit 8 further comprises a retaining element 22 arranged for fixing the locking element 7 to the carrying element 15.

The retaining element 22 has the shape of a thin disc provided with a central hole 23 through which the locking element 7 passes.

The retaining element 22 has a first surface 24 that interact with the locking element 22 and a second surface 25 opposite to the first surface 24.

The retaining element 22 has a plurality of holes, extending between the first surface 24 and the second surface 25. Each one of the above-mentioned holes receives a nut 26 that firmly connects the retaining element 22 to the carrying element 15.

As an alternative, the retaining element 22 can be firmly connected to the carrying element 15 by other kinds of connecting elements.

When the retaining element 22 is fixed to the carrying element 15 the first surface 24 contacts the first radial surface 18.

The locking element 7 comprises, in an end zone thereof, a ridge 27, extending outwardly of the further conical surface 10 with respect to a longitudinal axis of the locking element 7.

The locking element 7 comprises a groove 28 extending inwardly of the further conical surface 10 with respect to a longitudinal axis of the locking element 7.

The groove 28 is delimited, on one side thereof, by the ridge 27.

The second radial surface 20 of the carrying element 15, the second longitudinal surface 19 of the carrying element 15 and the first surface 24 of the retaining element 21 define a first chamber 29 that houses the ridge 27 of the locking element 7.

When the retaining element 22 is fixed to the carrying element 15 a portion of the retaining element 22 is received in the groove 28.

The second surface 25 of the retaining element 21 and the first lomgitudinal surface 17 of the carrying element 15 define a second chamber 30 that houses an end portion 31 of the body 4.

The moving unit 8 further comprises a driving element 32 arranged for driving the carrying element 15.

The moving unit 8 also comprises an actuating element 33 for actuating the driving element 32.

The driving element 32 comprises a first portion 34 connected to the carrying element 15 and a second portion 35 connected to the actuating element 33.

The first portion 34 has the shape of a fork and comprises a couple of arms 36 hinged to the carrying element 15 through pins 37.

The second portion 35 has the shape of a beam and comprises a first end region 38 firmly fixed to the first portion 34, a second end region 39 connected to the actuating element 33 and an intermediate region 40, interposed between the first end region 38 and the second end region 39, hinged to the supporting element 2.

The actuating element 33 comprises a pneumatic cylinder 41 having a main body 42 hinged to the supporting element 2 and a piston 43 hinged to the second end region 39 of the second portion 35.

The piston 43 is movable between a retracted position, in which it is received in the main body 42, and an extended position, in which it extends from the main body 42.

In operation, when the piston 43 is in the retracted position, the locking element 7 is in the unlocked configuration and the supporting element 2 can slide along the guide element 3.

Once the supporting element 2 has reached the desired position with respect to the guide element 3, the piston 43 is moved from the retraced position to the extended position.

When the piston 43 is in the extended position the locking element 7 is in the locked configuration and the supporting element 2 cannot slide along the guide element 3.

In case the position of the supporting element 2 with respect to the guide element 3 has to be changed, the piston 43 is moved from the extended position to the retracted position. In this way, the locking element 7 passes from the locked configuration to the unlocked configuration and therefore the supporting element 2 can slide on the guide element 3.

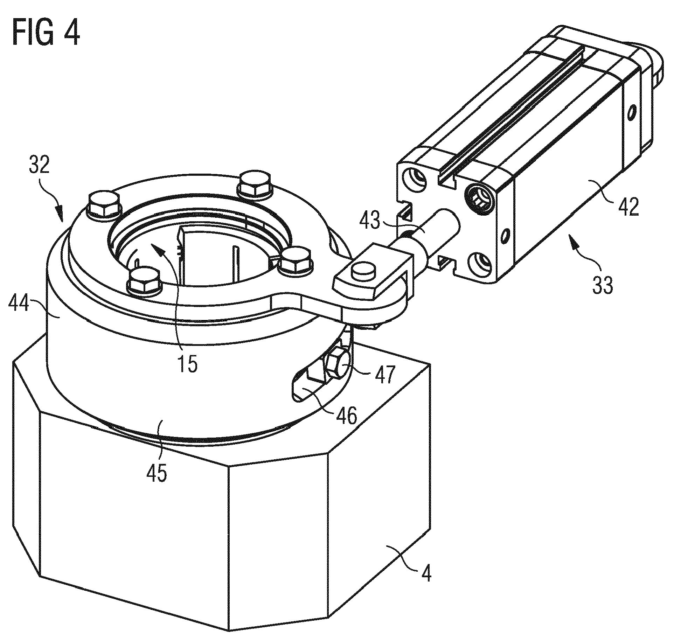

With reference to Figure 4, there is shown an embodiment of the locking unit 1 in which the driving element 32 has the shape of a casing 44 receiving and partly surrounding the carrying element 15.

The driving element 32 has a side wall 45 comprising a slot 46 having the shape of a cam and arranged for receiving pins 47 connected to the carrying element 15.

The driving element 32 is connected to the piston 43 so that the driving element 32 can rotate around a longitudinal axis thereof.

When the driving 32 element is rotated around the longitudinal axis thereof, the pins 47 slide into the slot 46. In this way, the locking element 7 is moved from the unlocked configuration to the locked configuration, and vice versa.

Owing to the invention, it is possible to obtain a locking unit for locking a movable supporting element on a guide element that has a simple structure. Due to the coupling of the conical surface and the further conical surface, in fact, the locking unit can be easily moved from the locking configuration to the unlocking configuration, and vice versa.

In addition, the locking unit is very strong and therefore able to bear heavy loads.

Clearly, changes may be made to a locking unit as described and illustrated herein without, however, departing from the scope of the present invention as defined in the accompanying claims.

## Claims

1. Locking unit for locking a movable supporting element (2) on a guide element (3), comprising a body (4) surrounding said guide element (3) and provided with a seat (6) arranged for receiving a locking element (7), a moving unit (8) arranged for moving said locking element (7) with respect to said seat (6), said seat (6) having a conical surface (9), said locking element (7) having a further conical surface (10) arranged for interacting with said conical surface (9) and a locking surface (11), opposite to said further conical surface (10), arranged for interacting with said guide element (3).

2. Locking unit according to claims 1, wherein said moving unit (8) moves said locking element (7) between an unlocked configuration, in which said supporting element (2) can slide with respect to said guide element (3), and a locked configuration, in which said supporting element (2) is clamped on said supporting element (2).

3. Locking unit according to claim 2, wherein, in said unlocked configuration, said further conical surface (10) does not interact with said conical surface (9) and said locking surface (11) does not contact said guide element (3), and wherein, in said locked configuration, said further conical surface (10) interacts with said conical surface (9) and said locking surface (11) contacts said guide element (3).

4. Locking unit according to any one of the preceding claims, wherein said locking element (7) has the shape of a ring (13) provided with a plurality of cuts (14).

5. Locking unit according to any one of the preceding claims, wherein said moving unit (8) comprises a carrying element (15) arranged for carrying said locking element (7), said carrying element (15) defining an inner cavity (21) that is delimited by a first longitudinal surface (17), a first radial surface 18, a second longitudinal surface 19 and a second radial surface 20, said first radial surface (18) being interposed between said first longitudinal surface (17) and said second longitudinal surface (19), and said second longitudinal surface (19) being interposed between said first radial surface (18) and said second radial surface (20).

6. Locking unit according to claim 5, wherein said moving unit (8) further comprises a retaining element (22) arranged for fixing said locking element (7) to said carrying element (15), said retaining element (22) having a first surface (24) that interact with said locking element (7) and a second surface (25) opposite to said first surface (24), said retaining element (22) being firmly connected to said carrying element (15) by means of connecting elements (26).

7. Locking unit according to claim 6, wherein said locking element (7) comprises, in an end zone thereof, a ridge (27), extending outwardly of said further conical surface (10) with respect to a longitudinal axis of said locking element (7), and wherein said second radial surface (20), said second longitudinal surface (19) and said first surface (24) define a first chamber (29) that houses said ridge (27).

8. Locking unit according to any one of claims 5 to 7, wherein said moving unit (8) further comprises a driving element (32) arranged for driving said carrying element (15) and an actuating element (33) arranged for actuating said driving element (32).

9. Locking unit according to claim 8, wherein said actuating element (33) comprises a pneumatic cylinder (41) having a main body (42) connected to said supporting element (2) and a piston (43) connected to said driving element (32).

10. Locking unit according to claim 8, or 9, wherein said driving element (32) comprises a first portion (34) connected to said carrying element (15) and a second portion (35) connected to said actuating element (33), said second portion (35) comprising a first end region (38) firmly fixed to said first portion (34), a second end region (39) connected to said actuating element (33) and an intermediate region (40) interposed between said first end region (38) and said second end region (39) and hinged to said supporting element (2).

11. Locking unit according to claim 10, wherein said first portion (34) has the shape of a fork and comprises a couple of arms (36) hinged to said carrying element (15) through pins (37).

12. Locking unit according to claim 8, or 9, wherein said driving element (32) has a side wall (45) comprising a slot (46) having the shape of a cam and arranged for receiving pins (47) connected to said carrying element (15) and wherein said actuating element (33) is arranged for rotating said driving element (32) around a longitudinal axis thereof.

13. Locking element according to claim 12, wherein said driving element (32) has the shape of a casing (44) receiving and partly surrounding said carrying element (15).
